# FASCICULE DE BREVET EUROPEEN

(11) **EP 3 383 522 B1**
(45) Date de publication et mention de la délivrance du brevet: **24.06.2020**
(21) Numéro de dépôt: 16816724.5
(22) Date de dépôt: 28.11.2016
(51) Int. Cl.: B01D 53/94, F01N 3/20, C01C 1/08

(54) **COMPOSITION À BASE D'URÉE POUR LE TRAITEMENT DES GAZ D'ÉCHAPPEMENT**
ZUSAMMENSETZUNG AUS HARNSTOFF ZUR BEHANDLUNG VON ABGASEN
COMPOSITION MADE FROM UREA FOR TREATING EXHAUST GASES

(30) Priorité: 02.12.2015 FR 1561762
(43) Date de publication de la demande: 10.10.2018
(73) Titulaire: Total Marketing Services, 92800 Puteaux (FR)
(72) Inventeur: COLLIN, Annabelle, 69007 Lyon (FR)
(74) Mandataire: Corizzi, Valérie
(86) Numéro de dépôt international: PCT/FR2016/053118
(87) Numéro de publication internationale: WO 2017/093644

(56) Documents cités:
- WO-A1-95/06805
- DE-A1-102008 041 903
- JP-A- 2007 145 796
- US-A- 5 809 774
- US-A- 6 003 303
- US-A1- 2003 226 312

## Description

La présente invention concerne une composition pour le traitement des gaz d'échappement à la sortie des moteurs Diesel embarqués ou stationnaires. Elle concerne également son utilisation dans tout dispositif de traitement de ces gaz d'échappement, que les moteurs soient des moteurs poids lourds ou des moteurs pour véhicules légers ou encore des moteurs pour des applications industrielles stationnaires.

### Etat de la technique antérieure

Les normes européennes en matière de pollution pour les carburants Diesel, en particulier celles applicables aux véhicules poids lourds, ont conduit les constructeurs de moteurs à mettre en place les post-traitements des gaz d'échappement. Ces post-traitements incluent les technologies SCR (Selective Catalytic Reducer ou réducteur catalytique sélectif en français), EGR (Exhaust Gas Recirculation ou recirculation de gaz d'échappement en français) et FAP (filtres à particules). Ces divers post-traitements peuvent être installés seuls ou en combinaison dans la mesure où ils n'agissent pas toujours sur les mêmes polluants présents dans les gaz d'échappement.

Pour répondre à la norme, en particulier à la norme Euro 6, qui s'applique en Europe à tous les véhicules à partir du 1^{er} septembre 2015, la plupart des constructeurs européens de véhicules automobiles ont opté pour le post-traitement SCR à l'échappement de leurs moteurs, ce post-traitement agissant exclusivement sur la diminution des oxydes d'azote présents dans les gaz. Un autre avantage de cette technique est qu'elle permet, par des réglages optimisés du moteur, une réduction sensible de la consommation du carburant.

Le post-traitement SCR consiste à réduire les NOx ou oxydes d'azote (NO, NO₂) sur un catalyseur contenant du platine et du palladium, et en présence d'un agent de réduction, généralement l'ammoniaque gazeux. Pour introduire de l'ammoniaque gazeux dans l'échappement, il est connu de le produire directement dans la conduite avant le système SCR en vaporisant une solution aqueuse d'urée. L'urée se trouvant injecté à une température moyenne oscillant généralement de 150 à 400°C, s'hydrolyse progressivement en ammoniaque gazeux. Eventuellement, d'autres agents précurseurs de l'ammoniaque peuvent être employés dans des conditions similaires.

Dans certaines configurations d'installation du SCR et de l'injection de précurseur d'ammoniaque, en particulier de l'injection d'urée, les constructeurs ont constaté l'apparition de dépôts dans les conduites d'échappement avant l'entrée du SCR. Ces dépôts peuvent être suffisamment importants pour provoquer une obturation partielle voire totale du conduit d'échappement liée à la contre pression à l'échappement et créer ainsi des pertes en puissance du moteur. A configuration d'injection constante, la quantité de dépôts formés est plus grande à basses températures qu'à hautes températures. Ces dépôts, selon les analyses qui ont été faites, sont constitués majoritairement d'acide cyanurique résultant de la décomposition incomplète de l'urée. Cet acide cyanurique peut se sublimer et produire à nouveau de l'ammoniaque gazeux. Toutefois, cette réaction ne peut se produire qu'à très haute température, supérieure à 450°C, température rarement atteinte à cet endroit dans les conduites d'échappement.

On a constaté notamment que ces dépôts étaient présents dans les conduites présentant des coudes du fait du manque de place dans le véhicule, et lorsque la distance séparant l'injection d'urée et le premier coude est trop courte. L'hypothèse formulée est que dans ce type de configuration, une partie des gouttes d'urée n'a pas le temps de se vaporiser et de se décomposer totalement en ammoniaque gazeux. Les gouttes d'urée se déposent sur la paroi du conduit qui est à une température trop basse pour permettre la décomposition complète en ammoniaque gazeux, et elles ne se décomposent que partiellement en formant des dépôts d'acide cyanurique collés à la paroi. Par ailleurs, on a également constaté qu'en fonction de la configuration de la ligne SCR, l'urée était susceptible de cristalliser dans la ligne, avec pour conséquence une obstruction de la ligne.

WO 2008/125745 décrit une solution aqueuse comprenant une partie majeure d'un constituant susceptible de libérer de l'ammoniaque gazeux au dessus de 200°C et une partie mineure d'au moins un additif polyfonctionnel dont la HLB varie de 7 à 17 pour limiter la formation des dépôts à base d'acide cyanurique dans tout dispositif de pulvérisation visant le post-traitement des gaz d'échappement, plus particulièrement des dispositifs SCR. Les additifs polyfonctionnels mis en œuvre sont notamment des éthers d'alcools gras polyalcoxylés et des esters d'alcools gras polyalcoxylés.

EP2337625 décrit un mélange de tensioactifs permettant de réduire le diamètre des gouttelettes d'une solution aqueuse d'urée, et ainsi favoriser sa vaporisation et la transformation de l'urée en ammoniaque gazeux dans un système SCR. La solution proposée consiste en un mélange d'alcools gras polyalcoxylés, avec des degrés d'alcoxylation contrôlés.

EP2488283 décrit des additifs pour solution d'urée du type alcools gras polyalcoxylés particuliers. Ces additifs sont également destinés à favoriser une réduction de la formation des dépôts issus de la décomposition de l'urée dans les systèmes SCR.

Toutefois, il a été constaté que certaines solutions de précurseur d'ammoniaque, en particulier d'urée, additivées, lorsqu'elles sont introduites dans le réservoir, ont tendance à mousser. Ce moussage gêne le remplissage du réservoir et peut entraîner son débordement. En outre, ce moussage peut entrainer l'injection d'air dans le système. Ce phénomène perturbe le contrôle de la quantité de solution injectée.

Une des solutions à ce problème consiste à ajouter des agents anti-mousse. Mais de tels additifs représentent un surcoût non négligeable.

Il subsiste donc le besoin d'un additif pour solutions aqueuses à base d'un agent réducteur des NOx, par exemple d'ammoniaque ou d'un précurseur dudit agent réducteur, comme l'urée, permettant de former une composition aux propriétés optimisées pour une utilisation sur une ligne SCR. On attend de cette composition qu'elle soit capable d'éviter ou de réduire les dépôts lors de l'utilisation sur une ligne SCR. On attend aussi de cette composition qu'elle présente un moussage réduit comparativement aux compositions additivées à base d'un agent réducteur des NOx ou d'un précurseur dudit agent réducteur, comme l'urée de l'art antérieur. On attend également de cette composition qu'elle permette un dosage précis des quantités de composition injectées.

Le document DE 10 2008 041 903 décrit une composition pour le traitement des gaz d'échappement comprenant du NOx, cette composition aqueuse comprenant un agent réducteur des NOx ou un précurseur d'un agent réducteur des NOx et un solvant ayant un point de fusion inférieur à celui de la solution aqueuse. La composition est une émulsion à base d'hydrocarbure et d'une solution d'urée, la phase hydrocarbure formant la phase continue. Cette émulsion évite les effets du refroidissement de la solution d'urée tels que les problèmes de fluidité et les difficultés pour pomper cette solution.

Le document US 2003/0226312 décrit une composition aqueuse pour améliorer le traitement des gaz d'échappement, cette composition comprenant un composé métallique. La composition est introduite, soit dans la chambre de combustion sous forme d'une émulsion avec le carburant, soit en émulsion ou seule sous forme d'un flux aqueux dans le gaz d'échappement. Le composé métallique neutralise les produits secondaires de la combustion. Lorsqu'une émulsion est utilisée il s'agit d'une émulsion eau-dans-carburant.

Le document US 5,809,774 décrit un procédé pour réduire les émissions de NOx dans un moteur diesel, ce procédé comprenant la formation d'une émulsion d'une composition aqueuse d'un agent réducteur des NOx dans un carburant, la composition étant séparée (par décantation) en ses deux principaux constituants avant utilisation. La partie carburant est alors injectée dans le moteur et la solution aqueuse d'un agent réducteur des NOx est injectée dans les gaz d'échappement. Cette invention vise à réduire les équipements de stockage.

Le document JP 2007145796 décrit une composition aqueuse, pour réduire les émissions de NOₓ, comprenant de l'urée, de la guanidine, du biuret et une huile hydrocarbonée.

### Résumé de l'invention

L'invention concerne une composition aqueuse comprenant au moins de l'urée caractérisée en ce qu'elle comprend au moins une paraffine en C20-C36 dispersée dans la phase aqueuse, ladite paraffine représentant au moins 90% en masse par rapport à la masse totale de paraffines dans la composition et de 50 à 10000 ppm en masse par rapport à la masse de l'urée.

Selon un mode de réalisation préféré, la composition comprend au moins un tensioactif, et éventuellement un agent stabilisant des émulsions.

Selon un mode de réalisation préféré, la composition comprend au moins un tensioactif non ionique.

Selon un mode de réalisation préféré, la composition comprend au moins un tensioactif non ionique choisi parmi les molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

Selon un mode de réalisation encore préféré, le tensioactif non ionique est choisi parmi les sorbitanes polyéthoxylés et les isosorbides polyéthoxylés.

Selon un mode de réalisation préféré, les tensioactifs hydrocarbonés oxygénés en C4-C20 comprenant un ou deux cycles furanose ou pyranose, et un ou plusieurs groupements hydroxyles, mono ou poly-alcoxylés, sont présents en quantités allant de 1 à 70% massique par rapport à la masse totale de paraffines dans la composition.

Selon un mode de réalisation préféré, la composition comprend en outre au moins un agent stabilisant des émulsions choisi parmi les acides gras.

Selon un mode de réalisation préféré, l'acide gras est présent en quantités allant de 1 à 50% massique par rapport à la masse totale de paraffines dans la composition.

Selon un autre mode de réalisation préféré, la composition comprend au moins un tensioactif non ionique choisi parmi les esters d'acides gras et de molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

Selon un mode de réalisation encore préféré, le ou les tensioactifs non-ioniques sont choisis parmi les esters d'acides gras et de sorbitanes mono- ou poly-éthoxylés et les esters d'acide gras et d'isosorbides mono- ou poly-éthoxylés.

Selon un mode de réalisation préféré, les esters d'acides gras et de molécules hydrocarbonées oxygénées en C4-C20 comprenant un ou deux cycles furanose ou pyranose, et un ou plusieurs groupements hydroxyles, mono ou poly-alcoxylés, sont présents en quantités allant de 1 à 70% massique par rapport à la masse totale de paraffines dans la composition.

Selon un mode de réalisation préféré, la composition comprend au moins :
- un tensioactif non-ionique choisi parmi les molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C8-C30, et
- un tensioactif non-ionique choisi parmi les esters d'acides gras et de molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

Selon un mode de réalisation préféré, la composition comprend au moins :
- un tensioactif non-ionique choisi parmi les molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C8-C30, et
- un tensioactif non-ionique choisi parmi les esters d'acides gras et de molécules hydrocarbonées oxygénées en C4-C20 comprenant un ou deux cycles furanose ou pyranose, et un ou plusieurs groupements hydroxyles.

Selon un mode de réalisation préféré, l'ensemble des tensioactifs et stabilisants d'émulsions représente de 1 à 100% massique par rapport à la masse totale de paraffine(s) dans la composition.

L'invention concerne encore l'utilisation d'une composition telle que définie ci-dessus, pour le post-traitement des gaz d'échappement par catalyseur Réducteur Catalytique Sélectif (également désigné catalyseur SCR pour Selective Catalytic Reducer en anglais).

Selon un mode de réalisation préféré, la composition est utilisée pour prévenir, limiter, empêcher la formation de dépôts dans une ligne d'échappement SCR.

L'invention concerne également l'utilisation d'une composition telle que définie ci-dessus, pour éviter ou réduire le moussage lors du remplissage d'un réservoir par la composition.

L'invention concerne aussi un procédé de traitement des gaz d'échappement dans un moteur à combustion interne, de préférence un moteur Diesel, équipé d'un système SCR, ce procédé étant caractérisé en ce qu'il comporte au moins une étape d'introduction d'une composition telle que définie ci-dessus dans la ligne SCR, en amont du système SCR.

Selon un mode de réalisation préféré, le procédé de traitement des gaz d'échappement permet de réduire les dépôts dans une ligne SCR, en particulier les dépôts d'acide cyanurique.

Selon un mode de réalisation préféré, le procédé comprend une étape de préparation d'une composition aqueuse d'urée, et de paraffine(s) telle que définie ci-dessus.

Il est aussi divulgué ici l'utilisation d'une émulsion ou d'une dispersion ou d'une suspension aqueuse de paraffine en C20-C36 comme additif dans une solution aqueuse d'urée, en vue d'une mise en œuvre dans un système SCR, ladite paraffine représentant de 50 à 10000 ppm en masse par rapport à la masse d'urée, la paraffine étant utilisée, en particulier, en émulsion ou dispersée ou en suspension dans la phase aqueuse.

Les compositions de l'invention présentent de nombreux avantages : elles sont utilisables de la même façon et dans les mêmes équipements que les solutions de l'art antérieur. Elles sont au moins aussi efficaces, voire pour certaines plus efficaces, que les solutions de l'art antérieur, notamment les solutions à base d'urée dans la réduction ou la prévention de la formation de dépôts dans les systèmes SCR. Elles n'entrainent pas ou peu de moussage lors de leur manipulation et permettent donc d'éviter les débordements lors du remplissage du réservoir. Elles sont stables au stockage. Elles permettent un contrôle précis de la quantité de composition injectée.

### Description détaillée

L'invention repose sur la mise au point de compositions aqueuses comprenant de l'urée, et comprenant en outre une ou plusieurs paraffines en C20-C36 dispersées dans ladite composition. Cette dispersion est avantageusement stabilisée au moyen d'un ou de plusieurs tensioactifs, préférentiellement non-ioniques.

Dans la présente demande, les termes « dispersion » ou « dispersées », employés pour désigner des compositions aqueuses comprenant la paraffine incluent aussi des émulsions, des suspensions, et plus généralement toute forme de composition dans laquelle la paraffine et l'eau forment un mélange sensiblement homogène.

### L'urée, précurseur d'agent réducteur des NOx :

La composition est préparée à partir d'une solution aqueuse comprenant au moins un précurseur d'un agent réducteur des NOx qui est l'urée

Par « agent réducteur des NOx », on entend un composé capable de réduire au moins partiellement, sinon en totalité, les NOx en ammoniaque gazeux, dans les conditions de fonctionnement d'une ligne SCR, c'est à dire à une température allant de 150 à 400°C. Parmi les agents réducteurs des NOx, on peut citer l'ammoniaque.

Par « précurseur d'un agent réducteur des NOx » on entend un composé susceptible de libérer l'agent réducteur des NOx sous l'effet de la température et/ou par réaction catalytique. Parmi les précurseurs d'ammoniaque, on peut citer l'urée qui par réaction d'hydrolyse produit de l'ammoniaque (agent réducteur des NOx) selon un procédé bien connu. Une ligne d'échappement SCR peut comprendre, en amont du système catalytique SCR, un catalyseur dont la fonction est de transformer un précurseur d'un agent réducteur des NOx en agent réducteur des NOx, notamment en ammoniaque gazeux.

La composition est préparée à partir d'une solution aqueuse d'urée. En effet, l'urée présente l'avantage d'être stable, non volatile, non explosive et non inflammable. Elle peut être transportée sans risque, stockée et manipulée par un opérateur sans formation spécifique.

Habituellement, la solution mise en œuvre dans les lignes SCR comprend 32,5% massique d'urée, de façon à satisfaire la norme ISO 22241-1 concernant la réduction du NOx dans les moteurs Diesel.

Pour cette utilisation, on prévoit donc que la composition présente une concentration en urée sensiblement égale à 32,5% massique. Toutefois, il entre également dans la portée de la présente invention de préparer des compositions aqueuses à base d'urée de concentration supérieure à 32,5%, que l'on dilue avant mise en œuvre. Cette variante permet de réaliser des économies lors du transport de ces compositions à base d'urée.

### Les paraffines :

La composition comprend en outre au moins une paraffine en C20-C36.

Les paraffines sont des alcanes, dont la formule brute est CₙH₂ₙ₊₂, avec n un entier allant de 8 à 40. Elles incluent les paraffines normales (linéaires) et les isoparaffines (ramifiées). Elles peuvent être liquides, pâteuses ou solides.

Les paraffines en C20-C36 représentent au moins 90% massiques de la totalité des paraffines de la composition. Encore mieux, les paraffines en C22-C32 représentent au moins 90% massiques de la totalité des paraffines de la composition.

De préférence, les paraffines en C20-C36 représentent au moins 95% massiques de la totalité des paraffines de la composition. Encore mieux, les paraffines en C22-C32 représentent au moins 95% massiques de la totalité des paraffines de la composition.

Les paraffines en C20-C36 sont introduites dans la composition aqueuse en quantités allant de 50 à 10000 ppm massiques de paraffines par rapport à la quantité d'urée en masse, de préférence de 150 à 5000 ppm, encore mieux de 300 à 3000 ppm, encore plus avantageusement de 300 à 1500 ppm.

Pour une solution aqueuse d'urée de concentration 32,5% massique d'urée, les paraffines en C20-C36 sont introduites dans la composition aqueuse en quantités allant de 15 à 3300 ppm massiques de paraffines par rapport à la masse de solution aqueuse, de préférence de 50 à 1500 ppm, encore mieux de 100 à 1000 ppm, encore plus avantageusement de 100 à 500 ppm.

### Le système tensioactif :

La composition aqueuse comprend avantageusement au moins un système tensioactif qui permet de maintenir la paraffine sous forme dispersée. Le système tensioactif permet de former une émulsion de paraffine dans l'eau.

De préférence le système tensioactif comprend au moins un tensioactif non-ionique.

### - Première variante :

Selon une première variante, le ou les tensioactifs non-ioniques sont choisis parmi les molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

On entend par molécule hydrocarbonée oxygénée, une chaine constituée exclusivement d'atomes de carbone, d'hydrogène et d'oxygène, ladite chaine pouvant être linéaire ou ramifiée, cyclique, polycyclique ou acyclique, saturée ou insaturée, et éventuellement aromatique ou polyaromatique. Une chaine hydrocarbonée oxygénée peut comprendre une partie linéaire ou ramifiée et une partie cyclique. Elle peut comprendre une partie aliphatique et une partie aromatique.

Selon l'invention les molécules hydrocarbonées oxygénées sont avantageusement saturées.

Selon l'invention les molécules hydrocarbonées oxygénées comprennent avantageusement une partie linéaire et une partie cyclique.

La partie cyclique peut être monocyclique ou polycyclique.

Selon l'invention, les carbones des groupements mono- ou poly-alcoxylés ne sont pas comptés dans la molécule hydrocarbonée oxygénée en C4-C20.

Avantageusement, les tensioactifs non-ioniques sont choisis parmi les molécules hydrocarbonées oxygénées en C4-C10 comprenant un ou deux cycles furanose ou pyranose, et un ou plusieurs groupements hydroxyles, un au moins des groupements hydroxyles étant substitué par un groupement mono- ou poly-alcoxylé.

De préférence, les tensioactifs mis en œuvre présentent un degré d'alcoxylation moyen allant de 1 à 80, mieux de 1 à 50, encore mieux de 5 à 25 et avantageusement de 10 à 20.

Généralement, les groupements mono- ou poly-alcoxylés sont formés par réaction de condensation d'oxyde d'alkylène sur la molécule cyclique porteuse de fonctions hydroxyle. Il peut s'agir de groupements oxyde d'éthylène, oxyde de propylène ou de mélanges de ces monomères qui forment des copolymères d'oxyde d'éthylène et d'oxyde de propylène, éventuellement des polymères blocs.

Le greffage de groupements alcoxylés sur les fonctions hydroxyles peut se faire par réaction de condensation sur une fonction hydroxyle ou sur plusieurs fonctions hydroxyles de la molécule, en fonction du nombre de fonction hydroxyles présentes, de leur réactivité, et des conditions réactionnelles. En général, on définit le degré d'alcoxylation moyen comme le nombre de moles d'oxyde d'alkylène que l'on a fait réagir avec la molécule à greffer

Le système tensioactif peut aussi comprendre des polymères et copolymères polyoxyde d'alkylène, en particulier des polyoxydes d'éthylène, des polyoxydes de propylène, des copolymères d'oxyde d'éthylène et d'oxyde de propylène, éventuellement des polymères blocs, ou des mélanges de ces polymères. Ces polymères se forment parfois en parallèle du greffage des oxydes d'alkylène sur les fonctions hydroxyles de la molécule hydrocarbonée oxygénée en C4-C20 et subsistent en mélange avec ceux-ci. Les produits commerciaux du type molécule hydrocarbonée oxygénée en C4-C20 porteuse de fonctions hydroxyles greffées par des oxydes d'alkylène comprennent généralement des quantités mineures de ces polymères et copolymères polyoxyde d'alkylène.

De préférence, le ou les tensioactifs non-ioniques sont choisis parmi les sorbitanes mono- ou poly-alcoxylés et les isosorbides mono- ou poly-alcoxylés ainsi que leurs mélanges. Encore plus préférentiellement, le ou les tensioactifs non-ioniques sont choisis parmi les sorbitanes mono- ou poly-éthoxylés et les isosorbides mono- ou poly-éthoxylés, ainsi que leurs mélanges. Ceux-ci peuvent être représentés par les formules (I) et (II) suivantes :

### - Sorbitanes éthoxylés :

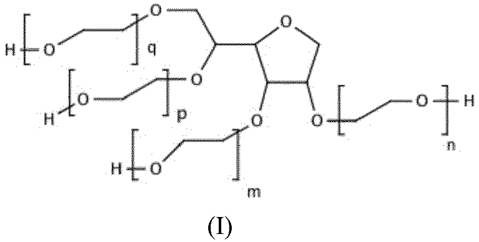

Avec m, n, p et q, identiques ou différents, des entiers allant de 0 à 20, la somme m+n+p+q allant de 1 à 80, de préférence de 1 à 50.

### - Isosorbides éthoxylés :

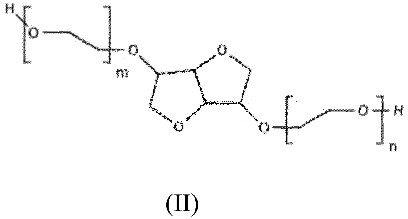

Avec m, n, identiques ou différents, des entiers allant de 0 à 20, la somme m+n allant de 1 à 40.

De préférences, les sorbitanes mono- ou poly-éthoxylés et les isosorbides mono- ou poly-éthoxylés mis en œuvre présentent un degré d'alcoxylation moyen allant de 1 à 50, avantageusement de 5 à 25 et encore plus préférentiellement de 10 à 20.

Les molécules hydrocarbonées oxygénées en C4-C20 alcoxylées, en particulier les sorbitanes mono- ou poly-éthoxylés et les isosorbides mono- ou poly-éthoxylés, ainsi que leurs mélanges, sont avantageusement introduits dans la composition aqueuse en quantités allant de 1 à 70% massique par rapport à la masse totale de paraffines dans la composition, mieux de 1 à 50%, de préférence de 5 à 40%, encore mieux de 10 à 30 %.

Selon cette variante, la composition comprend en outre avantageusement au moins un ou plusieurs stabilisants d'émulsion. De façon connue, ces stabilisants d'émulsion peuvent être choisis notamment parmi les acides gras en C8-C30, saturés ou insaturés, ainsi que leurs mélanges.

Le ou les acides gras peuvent être saturés ou insaturés et peuvent être linéaires ou ramifiés, et leur nombre de carbones peut être de 8 à 30, de préférence de 10 à 24. L'acide gras peut par exemple être un acide gras saturé tel que l'acide n-caproïque, l'acide caprylique, l'acide n-caprique, l'acide laurique, l'acide myristique, l'acide palmitique, l'acide stéarique, l'acide isostéarique, l'acide arachidique ou un acide gras insaturé tel que l'acide palmitoléique, l'acide oléique, l'acide linoléique, l'acide linolénique, l'acide arachidonique ou l'acide docosahexaénoïque. L'acide stéarique, l'acide myristique et l'acide palmitique sont des exemples d'acides gras préférés.De préférence le stabilisant d'émulsion est choisi parmi les mélanges d'acides gras en C10-C24, encore plus préférentiellement en C12-C20.

Avantageusement l'invention met en œuvre un mélange d'acides gras comprenant l'acide stéarique, l'acide myristique et l'acide palmitique. De préférence, l'invention met en œuvre un mélange d'acides gras essentiellement constitué de l'acide stéarique, de l'acide myristique et de l'acide palmitique.

Les stabilisants d'émulsion sont avantageusement introduits dans la composition aqueuse en quantités allant de 1 à 50% massique par rapport à la masse totale de paraffines dans la composition, de préférence de 5 à 40%, encore mieux de 10 à 30 %.

Selon cette première variante, de façon préférée, le système tensioactif consiste essentiellement en :
- Une ou plusieurs molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé,
- Un ou plusieurs stabilisants d'émulsion choisis parmi les acides gras en C8-C30 et leurs mélanges.

Encore plus préférentiellement, selon cette variante, le système tensioactif consiste essentiellement en :
- Une ou plusieurs molécules choisies parmi les sorbitanes mono- ou poly-éthoxylés et les isosorbides mono- ou poly-éthoxylés,
- Un ou plusieurs stabilisants d'émulsion choisis parmi les acides gras en C10-C24 et leurs mélanges.

De façon avantageuse, selon cette variante, le système tensioactif consiste essentiellement en :
- Une ou plusieurs molécules choisies parmi les sorbitanes mono- ou poly-éthoxylés de formule (I) et les isosorbides mono- ou poly-éthoxylés de formule (II), tels que définis ci-dessus,
- Un ou plusieurs stabilisants d'émulsion choisis parmi les acides gras en C12-C20 et leurs mélanges.

### - Seconde variante :

Selon une seconde variante, le ou les tensioactifs non-ioniques sont choisis parmi les esters d'acides gras et de molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé. L'acide gras peut être greffé sur un groupement hydroxyle du cycle ou en extrémité d'une chaine alcoxylée.

Selon l'invention les molécules hydrocarbonées oxygénées sont avantageusement saturées.

Selon l'invention les molécules hydrocarbonées oxygénées comprennent avantageusement une partie linéaire et une partie cyclique.

La partie cyclique peut être monocyclique ou polycyclique.

Selon l'invention, les carbones des groupements mono- ou poly-alcoxylés ne sont pas comptés dans la molécule hydrocarbonée oxygénée en C4-C20.

Avantageusement, les tensioactifs non-ioniques sont choisis parmi les esters d'acides gras et de molécules hydrocarbonées oxygénées en C4-C10 comprenant un ou deux cycles furanose ou pyranose, et un ou plusieurs groupements hydroxyles, un au moins des groupements hydroxyles étant substitué par un groupement mono- ou poly-alcoxylé. De préférence, les tensioactifs mis en œuvre présentent un degré d'alcoxylation moyen allant de 1 à 80, mieux de 1 à 50, encore mieux de 5 à 25, et avantageusement de 10 à 20.

Généralement, les groupements mono- ou poly-alcoxylés sont formés par réaction de condensation d'oxyde d'alkylène sur la molécule cyclique porteuse de fonctions hydroxyle. Il peut s'agir de groupements oxyde d'éthylène, oxyde de propylène ou de mélanges de ces monomères qui forment des copolymères d'oxyde d'éthylène et d'oxyde de propylène, éventuellement des polymères blocs.

Le greffage de groupements alcoxylés sur les fonctions hydroxyles peut se faire par réaction de condensation sur une fonction hydroxyle ou sur plusieurs fonctions hydroxyles de la molécule, en fonction du nombre de fonction hydroxyles présentes, de leur réactivité, et des conditions réactionnelles. En général, on définit le degré d'alcoxylation moyen comme le nombre de moles d'oxyde d'alkylène que l'on a fait réagir avec la molécule à greffer.

Le système tensioactif peut aussi comprendre des polymères et copolymères polyoxyde d'alkylène, en particulier des polyoxydes d'éthylène, des polyoxydes de propylène, des copolymères d'oxyde d'éthylène et d'oxyde de propylène, éventuellement des polymères blocs, ou des mélanges de ces polymères. Ces polymères se forment parfois en parallèle du greffage des oxydes d'alkylène sur les fonctions hydroxyles de la molécule hydrocarbonée oxygénée en C4-C20 et subsistent en mélange avec ceux-ci. Les produits commerciaux du type molécule hydrocarbonée oxygénée en C4-C20 porteuse de fonctions hydroxyles greffées par des oxydes d'alkylène comprennent généralement des quantités mineures de ces polymères et copolymères polyoxyde d'alkylène.

Le système tensioactif peut éventuellement comprendre des quantités mineures des esters d'acides gras et de ces polymères et copolymères polyoxyde d'alkylène.

Le nombre de molécules d'acides gras qui a réagi avec la molécule hydrogénée oxygénée en C4-C20 peut être supérieur à 1. L'ester peut ainsi être un monoester, un diester, un triester, un tétraester. Dans le cas ou la molécule est un polyester, des groupements acides gras distincts peuvent avoir réagi avec des groupements hydroxyle distincts. De préférence l'ester est un monoester.

Le fragment acide gras de l'ester d'acide gras et de sorbitane alcoxylé peut être saturé ou insaturé et peut être linéaire ou ramifié, et son nombre de carbones peut être de 8 à 30, de préférence de 10 à 24, encore mieux de 12 à 20. L'acide gras peut par exemple être un acide gras saturé tel que l'acide n-caproïque, l'acide caprylique, l'acide n-caprique, l'acide laurique, l'acide myristique, l'acide palmitique, l'acide stéarique, l'acide isostéarique, l'acide arachidique ou un acide gras insaturé tel que l'acide palmitoléique, l'acide oléique, l'acide linoléique, l'acide linolénique, l'acide arachidonique ou l'acide docosahexaénoïque. L'acide stéarique, l'acide myristique et l'acide palmitique sont des exemples d'acides gras préférés.

Avantageusement l'invention met en œuvre un mélange d'esters d'acides gras à base d'un mélange d'acides comprenant de l'acide stéarique, de l'acide myristique et de l'acide palmitique. De préférence, l'invention met en œuvre un mélange d'esters d'acides gras à base d'un mélange d'acides constitué de l'acide stéarique, de l'acide myristique et de l'acide palmitique.

Selon cette variante, de préférence, le ou les tensioactifs non-ioniques sont choisis parmi les esters d'acides gras et de sorbitanes mono- ou poly-alcoxylés ou d'isosorbides mono- ou poly-alcoxylés.

De préférences, les esters d'acides gras et de sorbitanes mono- ou poly-alcoxylés et les isosorbides mono- ou poly-alcoxylés mis en œuvre présentent un degré d'alcoxylation moyen allant de 1 à 80, mieux de 1 à 50, avantageusement de 5 à 25, et avantageusement de 10 à 20.

Selon cette variante, encore plus avantageusement, le ou les tensioactifs non-ioniques sont choisis parmi les esters d'acides gras et de sorbitanes mono- ou poly-éthoxylés ou d'isosorbides mono- ou poly-éthoxylés.

Ces molécules sont représentées par les formules (III) et (IV) ci-dessous :

### - Esters d'acides gras et de sorbitanes éthoxylés :

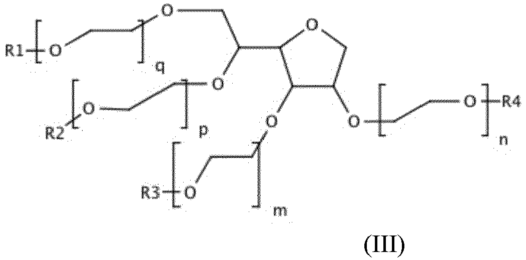

Avec m, n, p et q, identiques ou différents, des entiers allant de 0 à 20, la somme m+n+p+q allant de 1 à 80, de préférence de 1 à 50.

R1, R2, R3, R4 représentent indépendamment un atome d'hydrogène ou un groupement alkylcarboxylique en C8-C30, l'un au moins de R1, R2, R3 et R4 étant distinct de H.

### - Esters d'acides gras et d'isosorbides éthoxylés :

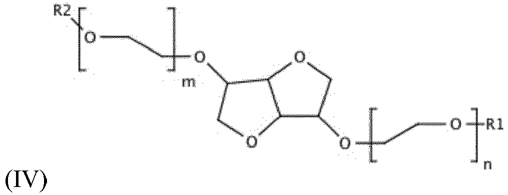

Avec m, n, identiques ou différents, des entiers allant de 0 à 20, la somme m+n allant de 1 à 40 ; R1, R2 représentent indépendamment un atome d'hydrogène ou un groupement alkylcarboxylique en C8-C30, l'un au moins de R1 et R2 étant distinct de H.

De telles molécules sont disponibles commercialement notamment sous le nom Polysorbate ou sous la marque Radiasurf ® commercialisée par la société Oleon.

Les esters d'acides gras et de molécules hydrocarbonées oxygénées en C4-C20 alcoxylées, en particulier les esters d'acides gras et de sorbitanes mono- ou poly-éthoxylés et d'isosorbides mono- ou poly-éthoxylés, ainsi que leurs mélanges, sont avantageusement introduits dans la composition aqueuse en quantités allant de 1 à 70% massique par rapport à la masse totale de paraffines dans la composition, mieux de 1 à 50%, de préférence de 5 à 40%, encore mieux de 10 à 30 %.

Selon cette seconde variante, de façon préférée, le système tensioactif consiste essentiellement en :
Un ou plusieurs esters d'acides gras et de molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

Encore plus préférentiellement, selon cette variante, le système tensioactif consiste essentiellement en :
Un ou plusieurs esters d'acides gras et de sorbitanes mono- ou poly-éthoxylés ou d'isosorbides mono- ou poly-éthoxylés.

De façon avantageuse, selon cette variante, le système tensioactif consiste essentiellement en :
Une ou plusieurs molécules choisies parmi les esters d'acides gras et de sorbitanes mono- ou poly-éthoxylés de formule (III) ou d'isosorbides mono- ou poly-éthoxylés de formule (IV) telles que définies ci-dessus.

### - Troisième variante :

Selon un mode de réalisation préféré, la composition comprend au moins, ou mieux, consiste essentiellement en :
- un tensioactif non-ionique choisi parmi les molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C8-C30,
- un tensioactif non-ionique choisi parmi les esters d'acides gras en C8-C30 et de molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

Encore plus préférentiellement, selon cette variante, la composition comprend au moins, ou mieux, consiste essentiellement en :
- un tensioactif non-ionique choisi parmi les sorbitanes mono- ou poly-éthoxylés et les isosorbides mono- ou poly-éthoxylés,
- un stabilisant d'émulsion choisi notamment parmi les acides gras en C10-C24,
- un tensioactif non-ionique choisi parmi esters d'acide gras en C10-C24 et de sorbitanes mono- ou poly-éthoxylés ou d'isosorbides mono- ou poly-éthoxylés.

Avantageusement, selon cette variante, la composition comprend au moins, ou mieux, consiste essentiellement en :
- un tensioactif non-ionique choisi parmi les sorbitanes mono- ou poly-éthoxylés de formule (I) et les isosorbides mono- ou poly-éthoxylés de formule (II),
- un stabilisant d'émulsion choisi notamment parmi les acides gras en C12-C20,
- un tensioactif non-ionique choisi parmi esters d'acide gras en C12-C20 et de sorbitanes mono- ou poly-éthoxylés de formule (III) ou d'isosorbides mono- ou poly-éthoxylés de formule (IV).

Eventuellement, compte-tenu du procédé de synthèse de ces molécules, la présence de polymères et de copolymères d'oxyde d'éthylène et d'oxyde de propylène ainsi que des esters d'acides gras et de tels polymères peut être envisagée.

Les tensioactifs et stabilisants sont mis en œuvre en quantités suffisantes pour permettre la dispersion de la paraffine dans la composition aqueuse. L'homme du métier sait adapter leur dosage en fonction de la paraffine choisie et de sa quantité dans la composition.

Avantageusement, l'ensemble des tensioactifs et stabilisants représente de 1 à 100% massique par rapport à la masse totale de paraffine(s) dans la composition, mieux de 5 à 50% massique.

### - Quatrième variante :

Selon un autre mode de réalisation préféré, la composition comprend au moins, ou mieux, consiste essentiellement en :
- un tensioactif non-ionique choisi parmi les molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé,
- un stabilisant d'émulsion choisi notamment parmi les acides gras en C8-C30,
- un tensioactif non-ionique choisi parmi les esters d'acides gras en C8-C30 et de molécules hydrocarbonées oxygénées en C4-C20 comprenant un ou deux cycles furanose ou pyranose, et un ou plusieurs groupements hydroxyles.

Encore plus préférentiellement, selon cette variante, la composition comprend au moins, ou mieux, consiste essentiellement en :
- un tensioactif non-ionique choisi parmi les sorbitanes mono- ou poly-éthoxylés et les isosorbides mono- ou poly-éthoxylés,
- un stabilisant d'émulsion choisi notamment parmi les acides gras en C10-C24,
- un tensioactif non-ionique choisi parmi esters d'acide gras en C10-C24 et de sorbitanes ou d'isosorbides.

### - Esters d'acides gras et de sorbitanes :

Ils peuvent être représentés par la formule (V) ci-dessous

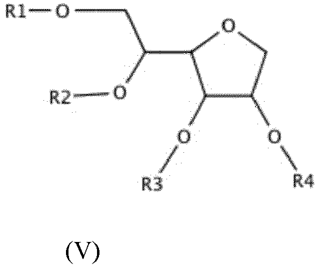

Dans laquelle R1, R2, R3, R4 représentent, indépendamment, un atome d'hydrogène ou un groupement alkylcarboxylique en C8-C30, l'un au moins de R1, R2, R3 et R4 étant distinct de H.

### - Esters d'acides gras et d'isosorbides :

Ils peuvent être représentés par la formule (VI) ci-dessous 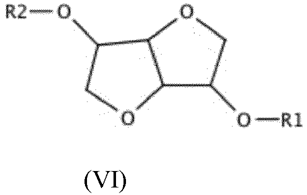 dans laquelle R1, R2 représentent indépendamment un atome d'hydrogène ou un groupement alkylcarboxylique en C8-C30, l'un au moins de R1 et R2 étant distinct de H.

Avantageusement, selon cette variante, la composition comprend au moins, ou mieux, consiste essentiellement en :
- un tensioactif non-ionique choisi parmi les sorbitanes mono- ou poly-éthoxylés de formule (I) et les isosorbides mono- ou poly-éthoxylés de formule (II),
- un stabilisant d'émulsion choisi notamment parmi les acides gras en C12-C20,
- un tensioactif non-ionique choisi parmi esters d'acide gras en C12-C20 et de sorbitanes de formule (V) ou d'isosorbides de formule (VI).

Eventuellement, compte-tenu du procédé de synthèse de ces molécules, la présence de polymères et de copolymères d'oxyde d'éthylène et d'oxyde de propylène peut être envisagée.

Les tensioactifs et stabilisants sont mis en œuvre en quantités suffisantes pour permettre la dispersion de la paraffine dans la composition aqueuse. L'homme du métier sait adapter leur dosage en fonction de la paraffine choisie et de sa quantité dans la composition.

Avantageusement, l'ensemble des tensioactifs et stabilisants représente de 1 à 100% massique par rapport à la masse totale de paraffine(s) dans la composition, mieux de 5 à 50% massique.

### La composition :

La composition aqueuse peut contenir un ou plusieurs autres additifs que les additifs polyfonctionnels tels que définis ci-dessus, tels que par exemple des co-solvants destinés à favoriser la dissolution du ou des tensioactifs dans la composition aqueuse. La composition aqueuse est préparée de manière usuelle par mélange de ses constituants, de préférence à température ambiante, typiquement dans une plage de température allant en général de 10 à 60 °C.

Les additifs polyfonctionnels solubles dans l'eau, plus particulièrement à température ambiante, sont en général préférés. Pour des raisons de rapidité de mélange des constituants de la solution aqueuse, on préfère éviter les composants pâteux et/ou solides.

De manière préférée, les compositions aqueuses répondent à la norme ISO 22241-1 pour ce qui concerne les quantités indiquées dans le tableau 1 de ladite norme : aldéhydes, matière insoluble, phosphate, calcium, fer, cuivre, zinc, chrome, nickel, aluminium, sodium, potassium. D'une manière générale les compositions aqueuses contiennent tout élément et/ou composant en quantité telle qu'il n'est pas susceptible d'être un poison du catalyseur SCR.

Selon une variante, la composition aqueuse est une composition concentrée comprenant l'urée, la ou les paraffine(s) et le ou les tensioactif(s) et stabilisant(s), dans les proportions exposées ci-dessus qui peut être diluée avec de l'eau avant sa mise en œuvre.

Selon une autre variante, la composition aqueuse est une composition comprenant l'urée, la ou les paraffine(s) et le ou les tensioactif(s) et stabilisant(s), dans les proportions exposées ci-dessus, la concentration en urée étant celle recommandée par une injection dans le système SCR. Une telle composition est injectée sans dilution préalable. Selon cette variante, de préférence la composition aqueuse est une composition comprenant de l'urée, la ou les paraffine(s) et le ou les tensioactif(s) et stabilisant(s), dans les proportions exposées ci-dessus, la concentration en urée étant de 32,5%.

Selon une autre variante préférée, la composition aqueuse est préparée à partir d'une solution aqueuse préformulée d'urée, comme par exemple une composition commerciale connue sous le nom de AdBlue ® comprenant 32,5% massique d'urée, et d'une composition aqueuse préformulée de paraffine(s). Selon cette variante, la composition aqueuse de paraffine comprend la ou les paraffine(s) et le système tensioactif décrit ci-dessus. La composition aqueuse de paraffine présente avantageusement une concentration en matières actives de 10 à 90% massiques par rapport à la masse totale de la composition, les matières actives incluant la ou les paraffines et le ou les tensioactifs tels qu'ils ont été définis ci-dessus, et dans les proportions relatives qui ont été définies ci-dessus. Préférentiellement, selon cette variante, la composition aqueuse de paraffine présente une concentration en matières actives de 25 à 75% massiques par rapport à la masse totale de la composition. Le mélange des deux compositions est réalisé avant l'injection dans le système SCR.

Selon cette variante, les quantités de paraffine et de tensioactif étant faibles comparativement au reste de la composition, celle-ci peut être définie comme une composition aqueuse comprenant sensiblement 32,5% massique d'urée.

Selon un mode de réalisation préféré, la composition de l'invention consiste essentiellement en :
- de l'eau,
- de l'urée,
- une ou plusieurs paraffines en C20-C36 dispersées dans la phase aqueuse, lesdites paraffines représentant au moins 90% en masse par rapport à la masse totale de paraffines dans la composition et de 50 à 10000 ppm en masse par rapport à la masse de l'urée,
- un ou plusieurs tensioactifs et stabilisants d'émulsions, l'ensemble des tensioactifs et stabilisants d'émulsions représentant de 1 à 100% massique par rapport à la masse totale de paraffine(s) dans la composition.

### Procédé de mise en œuvre :

L'invention a encore pour objet l'utilisation de la composition aqueuse selon l'invention dans tout dispositif de pulvérisation visant le post-traitement des gaz d'échappement, plus particulièrement des dispositifs SCR.

L'invention concerne encore un procédé de traitement d'un flux d'échappement d'un moteur, ce procédé comprenant l'injection d'une composition à base, d'urée, telle qu'elle a été décrite ci-dessus. L'injection de la composition de l'invention est réalisée en amont par rapport au positionnement du dispositif SCR dans la conduite d'échappement. Ce procédé permet de réduire les dépôts dans la conduite d'échappement, en particulier les dépôts d'acide cyanurique.

En outre, comparativement à des compositions de l'art antérieur, le procédé de l'invention permet la manipulation de la composition, en particulier le remplissage du réservoir, sans moussage ou avec un moussage réduit.

Enfin, comparativement à des compositions de l'art antérieur, le procédé de l'invention permet un meilleur contrôle de la quantité injectée d'urée. En effet, en l'absence de moussage, seule la composition aqueuse est injectée, tandis que certaines compositions antérieures, par leur moussage, favorisent l'injection d'air dans le réservoir et entraînent un fonctionnement imprécis de la jauge de remplissage.

L'invention concerne encore l'utilisation d'une dispersion ou d'une émulsion ou d'une suspension aqueuse de paraffine telle que définie ci-dessus comme additif dans une solution aqueuse d'urée, en vue d'une mise en œuvre dans un système SCR. Cette utilisation vise à réduire ou éviter les dépôts dans le dispositif SCR tout en réduisant ou évitant également le moussage de la solution aqueuse d'urée lors de sa manipulation, en particulier lors de son introduction dans un réservoir. Cette utilisation vise également à permettre un meilleur contrôle de la quantité d'urée injectée.

### Figures :

Figure 1 : représentation schématique d'un banc SCR.

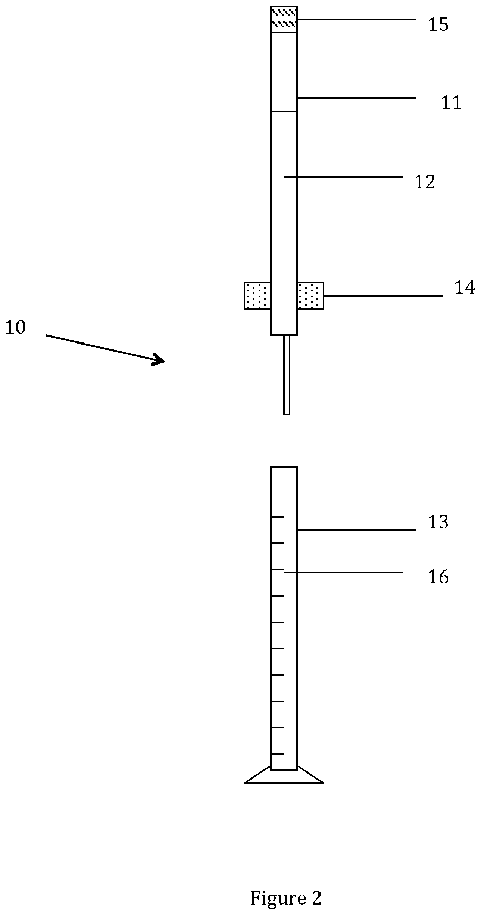

Figure 2 : représentation schématique d'un dispositif d'évaluation du moussage.

Les exemples ci-après sont donnés en vue d'illustrer les caractéristiques de l'invention mais non d'en limiter la portée.

### Partie expérimentale :

Dans la partie expérimentale, tous les pourcentages sont exprimés en masse par rapport à la masse totale de la composition.

### I-Matériel et méthodes :

### - Préparation des compositions :

On a utilisé comme base de la composition une solution aqueuse commerciale à 32,5% massique d'urée : AdBlue ®.

Cette composition a été additivée avec différentes compositions dans les quantités indiquées dans le tableau 2 : D'une part avec une émulsion de paraffines (Emulsion P), d'autre part avec des compositions tensioactives de l'art antérieur.
- Emulsion P : émulsion aqueuse comprenant (en % massiques par rapport à la masse totale de l'émulsion)
   - 50% d'eau,
   - 42% de paraffines en C22-C32,
   - environ 8 % d'un mélange de sorbitanes et d'isosorbides polyoxyéthylénés, la distribution des chaines polyoxyéthylénées étant centrée respectivement sur C13 et C16, d'acides gras constitués par des acides stéariques (C18 : 0), palmitiques (C16 : 0) et myristiques (C14 : 0) et des esters stéariques (C18 : 0) et palmitiques (C16 : 0) de sorbitane.
- Polyaldo™ TMSH KFG (3-1-SH) : produit de la réaction d'un triglycérol avec des acides gras en C16-C18 saturés et en C18 insaturés, commercialisé par la société Lonza
- Marlipal O13/30 ® : 13-oxoalcool (isotridécanol + 3 EO/mol) commercialisé par la société Sasol.
- Mélange de 70% Marlipal ® O13/120 + 30% Marlipal ® O13/30 (commercialisés par la société Sasol) : 30% C13-oxoalcool (isotridécanol + 3 EO/mol) + 70% C13-oxoalcool (isotridécanol + 12 EO/mol)

Radiasurf 7157 ® : monostéarate de sorbitane éthoxylé (20EO) - HLB=15 commercialisé par la société Oleon

Radiasurf 7137 ® : monolaurate de sorbitane éthoxylé (20EO) commercialisé par la société Oleon

### Proppabort : alcool gras alcoxylé commercialisé par la société Proppabort AB

### - Observation et mesure des dépôts :

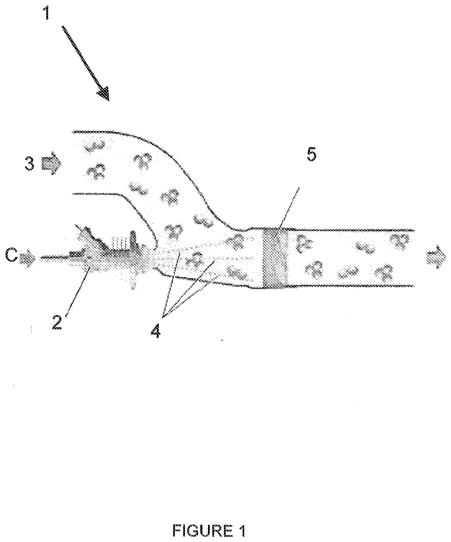

Les essais ont été réalisés sur un banc SCR 1 dont la configuration est représentée sur la figure 1. La composition C est pulvérisée via un injecteur 2 situé légèrement en retrait par rapport au flux 3 des gaz d'échappement. Les gouttelettes de solution 4 viennent ensuite s'impacter sur le mélangeur 5 afin de faciliter son homogénéisation et la réaction d'hydrolyse de l'urée dans le flux de gaz chauds. La ligne d'échappement est alimentée en air par un pistolet à air chaud (non représenté), la température des gaz et leur débit sont contrôlés. Des thermocouples (non représentés) placés au niveau de l'injecteur, en sortie de ligne et à proximité de la ligne permettent le suivi des conditions thermiques au cours de l'essai.

Les conditions opératoires de l'essai sont résumées dans le tableau 1 ci-dessous :

**Tableau 1 : Conditions opératoires sélectionnées pour le banc SCR**

| | |
|---|---|
| Durée [h] | 2,5 |
| Débit d'air [L/min] | 500 |
| Débit d'AdBlue ® [g/h] | 60 |
| Température injecteur [°C] | 250 |

Afin d'évaluer la performance d'un produit, on a comparé la masse de dépôts recueillie sur les deux zones suivantes : la zone « injecteur » (nez/porte-injecteur) et la zone « mélangeur » (amont/mixeur/aval).

Les dépôts ont donc été recueillis et pesés sur les zones «injecteur» et « mélangeur » de la ligne SCR. On a calculé le total des dépôts récoltés pour chaque essai.

### - Evaluation du moussage :

La méthode repose sur l'emploi d'un dispositif 10 comprenant un réservoir 11 (colonne d'injection) dans lequel le produit 12 est conservé sous pression, une éprouvette 13 graduée en verre de 250 mL, une cellule de détection 14 de type photoélectrique, une électrovanne 15 contrôlant l'ouverture et la fermeture du réservoir et un chronomètre (non représenté). La méthode consiste à injecter une quantité de produit 12 (100 mL) à une pression de 400 millibars dans l'éprouvette graduée 13. La cellule de détection 14 détecte le moment où les 100mL de produit 12 initialement présents dans la colonne d'injection 11 se sont vidés dans l'éprouvette 13. L'électrovanne 15 se ferme et le chronomètre se déclenche. Le volume de mousse formé est repéré visuellement à l'aide des graduations 16 présentes sur l'éprouvette 13. Le temps au bout duquel la mousse a complètement disparu est également noté. L'essai est arrêté au bout de 300 secondes si de la mousse est encore présente.

### II- Essais :

Les essais réalisés sont rapportés dans le tableau 2 ci-dessous. L'exemple de référence a été réalisé avec une solution aqueuse d'urée à 32,5% commerciale AdBlue ®. Les autres exemples ont été réalisés avec la même solution aqueuse d'urée à 32,5% commerciale AdBlue ® à laquelle ont été ajoutés les différents additifs mentionnés.

Les essais C1 et C2 sont selon l'invention. Les essais D1 à D6 sont comparatifs.

**Tableau 2 : formulations réalisées**

| N° Essai | Additif | Quantité d'additif en matière active (ppm) | Quantité d'additif (ppm) | Observations |
|---|---|---|---|---|
| Réf (*) | - | - | - | Clair et limpide |
| C1 | Emulsion P | 250 | 500 | Opalescent |
| C2 | Emulsion P | 500 | 1000 | Opalescent |
| D1 | Polyaldo™ TMSH KFG (3-1-SH) | 500 | 500 | Trouble |
| D2 | Marlipal O13/30 ® | 500 | 500 | Clair et limpide |
| D3 | Marlipal ® (70% O13/120 + 30% O13/30) | 500 | 500 | Clair et limpide |
| D4 | Radiasurf 7157 ® | 500 | 500 | Clair et limpide |
| D5 | Radiasurf 7137 ® | 500 | 500 | Clair et limpide |
| D6 | PROPPABORT | 1000 | 1000 | Légèrement trouble |

| | | | | |
|---|---|---|---|---|
| (*) ADBLUE ® Solution aqueuse à 32,5% d'urée | | | | |

### III- Résultats :

Les résultats des tests sont rapportés dans le tableau 3 ci-dessous :

**Tableau 3 : résultats des essais**

| N° Essai | Tps de disparition mousse (s) | Volume de mousse [mL] | Quantité totale de dépôts | Quantité dépôts mélangeur | Quantité dépôts injecteur |
|---|---|---|---|---|---|
| Réf (*) | 0 | 0 | 884 | 803 | 81 |
| C1 | 14 | 30 | 221 | 136 | 85 |
| C2 | 198 | 30 | 204 | 127 | 77 |
| D1 | >300 | 40 | 222 | 174 | 48 |
| D2 | 150 | 40 | 367 | 251 | 116 |
| D3 | >300 | 68 | 228 | 77 | 151 |
| D4 | >300 | 92 | 342 | 241 | 101 |
| D5 | >300 | 90 | 463 | 356 | 107 |
| D6 | >300 | 30 | 537 | 379 | 158 |

On constate que les exemples selon l'invention C1 et C2 présentent une quantité de dépôts réduite par rapport à la référence et par rapport à la majorité des exemples comparatifs (D2 à D6). En outre, les exemples selon l'invention présentent peu de moussage, et celui-ci disparaît de façon rapide, contrairement aux compositions de l'art antérieur.

## Revendications

1. Composition aqueuse comprenant au moins de l'urée, **caractérisée en ce qu'**elle comprend au moins une paraffine en C20-C36 dispersée dans la phase aqueuse, ladite paraffine représentant au moins 90% en masse par rapport à la masse totale de paraffines dans la composition et de 50 à 10000 ppm en masse par rapport à la masse de l'urée.

2. Composition selon la revendication 1, qui comprend au moins un tensioactif, de préférence au moins un tensioactif non ionique, et éventuellement un agent stabilisant des émulsions.

3. Composition selon la revendication 2 qui comprend au moins un tensioactif non ionique choisi parmi les molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

4. Composition selon la revendication 3 dans laquelle le tensioactif non ionique est choisi parmi les sorbitanes polyéthoxylés et les isosorbides polyéthoxylés.

5. Composition selon l'une quelconque des revendications 2 à 4, qui comprend en outre au moins un agent stabilisant des émulsions choisi parmi les acides gras.

6. Composition selon la revendication 2 qui comprend au moins un tensioactif non ionique choisi parmi les esters d'acides gras et de molécules hydrocarbonées oxygénées en C4-C20 comprenant un ou deux cycles furanose ou pyranose, et un ou plusieurs groupements hydroxyles, un au moins des groupements hydroxyles étant substitué par un groupement mono- ou poly-alcoxylé.

7. Composition selon la revendication 6, dans laquelle le ou les tensioactifs non-ioniques sont choisis parmi les esters d'acides gras et de sorbitanes mono- ou poly-éthoxylés et les esters d'acide gras et d'isosorbides mono- ou poly-éthoxylés.

8. Composition selon l'une quelconque des revendications 2 à 7, dans laquelle l'ensemble des tensioactifs et stabilisants d'émulsions représente de 1 à 100% massique par rapport à la masse totale de paraffine(s) dans la composition.

9. Utilisation d'une composition selon l'une quelconque des revendications 1 à 8, pour le post-traitement des gaz d'échappement par catalyseur Réducteur Catalytique Sélectif.

10. Utilisation selon la revendication 9, pour prévenir, limiter, empêcher la formation de dépôts dans une ligne d'échappement SCR.

11. Utilisation d'une composition selon l'une quelconque des revendications 1 à 8, pour éviter ou réduire le moussage lors du remplissage d'un réservoir par la composition.

12. Procédé de traitement des gaz d'échappement dans un moteur à combustion interne, de préférence un moteur Diesel, équipé d'un système SCR, ce procédé étant **caractérisé en ce qu'**il comporte au moins une étape d'introduction d'une composition selon l'une quelconque des revendications 1 à 8 dans la ligne SCR, en amont du système SCR.

13. Procédé selon la revendication 12 pour réduire les dépôts dans une ligne SCR, en particulier les dépôts d'acide cyanurique.

## Patentansprüche

1. Wässrige Zusammensetzung, die mindestens Harnstoff umfasst, **dadurch gekennzeichnet, dass** sie mindestens ein in der wässrigen Phase dispergiertes C20-C36-Paraffin umfasst, wobei das Paraffin bezogen auf die Gesamtmasse an Paraffinen in der Zusammensetzung mindestens 90 Gewichts-% und bezogen auf die Masse an Harnstoff 50 bis 10.000 Masse-ppm ausmacht.

2. Zusammensetzung nach Anspruch 1, die mindestens einen grenzflächenaktiven Stoff umfasst, vorzugsweise mindestens einen nichtionischen grenzflächenaktiven Stoff, und gegebenenfalls einen Emulsionsstabilisator.

3. Zusammensetzung nach Anspruch 2, die mindestens einen nichtionischen grenzflächenaktiven Stoff umfasst, der aus oxidierten C4-C20-Kohlenwasserstoffmolekülen, die einen oder zwei Furanose- oder Pyranosering(e) und eine oder mehrere Hydroxylgruppe(n) umfassen, ausgewählt ist, wobei mindestens eine der Hydroxylgruppen durch eine mono- oder polyalkoxylierte Gruppe substituiert ist.

4. Zusammensetzung nach Anspruch 3, wobei der nichtionische grenzflächenaktive Stoff aus polyethoxylierten Sorbitanen und polyethoxylierten Isosorbiden ausgewählt ist.

5. Zusammensetzung nach einem der Ansprüche 2 bis 4, die ferner mindestens einen Emulsionsstabilisator umfasst, der aus Fettsäuren ausgewählt ist.

6. Zusammensetzung nach Anspruch 2, die mindestens einen nichtionischen grenzflächenaktiven Stoff umfasst, der aus Estern von Fettsäuren und oxidierten C4-C20-Kohlenwasserstoffmolekülen, die einen oder zwei Furanose- oder Pyranosering(e) und eine oder mehrere Hydroxylgruppe(n) umfassen, ausgewählt ist, wobei mindestens eine der Hydroxylgruppen durch eine mono- oder polyalkoxylierte Gruppe substituiert ist.

7. Zusammensetzung nach Anspruch 6, wobei der oder die nichtionische(n) grenzflächenaktive(n) Stoff(e) aus Estern von Fettsäuren und mono- oder polyethoxylierten Sorbitanen und Estern von Fettsäuren und mono- oder polyethoxylierten Isosorbiden ausgewählt sind.

8. Zusammensetzung nach einem der Ansprüche 2 bis 7, wobei die Gesamtheit aus grenzflächenaktiven Stoffen und Emulsionsstabilisatoren 1 bis 100 Masse-% bezogen auf die Gesamtmasse an Paraffin(en) in der Zusammensetzung ausmacht.

9. Verwendung einer Zusammensetzung nach einem der Ansprüche 1 bis 8 für die Nachbehandlung von Abgasen mit einem Katalysator zur selektiven katalytischen Reduktion.

10. Verwendung nach Anspruch 9, um der Bildung von Ablagerungen in einer SKR-Leitung vorzubeugen, sie zu begrenzen, sie zu verhindern.

11. Verwendung einer Zusammensetzung nach einem der Ansprüche 1 bis 8, um während des Befüllens eines Behälters mit der Zusammensetzung die Schaumbildung zu verhindern oder zu verringern.

12. Verfahren zur Abgasbehandlung in einem Verbrennungsmotor, vorzugsweise einem Dieselmotor, der mit einem SKR-System ausgestattet ist, wobei dieses Verfahren **dadurch gekennzeichnet ist, dass** es mindestens einen Schritt zum Einleiten einer Zusammensetzung nach einem der Ansprüche 1 bis 8 in die SKR-Leitung vor dem SKR-System umfasst.

13. Verfahren nach Anspruch 12 zum Reduzieren von Ablagerungen in einer SKR-Leitung, insbesondere von Cyanursäure-Ablagerungen.

## Claims

1. Aqueous composition comprising at least urea, **characterized in that** it comprises at least one C₂₀-C₃₆ paraffin dispersed in the aqueous phase, the said paraffin representing at least 90% by weight, with respect to the total weight of paraffins in the composition, and from 50 to 10,000 ppm by weight, with respect to the weight of the urea.

2. Composition according to Claim 1, which comprises at least one surfactant, preferably at least one nonionic surfactant, and optionally a stabilizing agent for emulsions.

3. Composition according to Claim 2, which comprises at least one nonionic surfactant chosen from oxygen-comprising C₄-C₂₀ hydrocarbon molecules comprising one or two furanose or pyranose rings, and one or more hydroxyl groups, at least one of the hydroxyl groups being substituted by a mono- or polyalkoxylated group.

4. Composition according to Claim 3, in which the nonionic surfactant is chosen from polyethoxylated sorbitans and polyethoxylated isosorbides.

5. Composition according to any one of Claims 2 to 4, which additionally comprises at least one stabilizing agent for emulsions chosen from fatty acids.

6. Composition according to Claim 2, which comprises at least one nonionic surfactant chosen from esters of fatty acids and of oxygen-comprising C₄-C₂₀ hydrocarbon molecules comprising one or two furanose or pyranose rings, and one or more hydroxyl groups, at least one of the hydroxyl groups being substituted by a mono- or polyalkoxylated group.

7. Composition according to Claim 6, in which the nonionic surfactant(s) is/are chosen from esters of fatty acids and of mono- or polyethoxylated sorbitans and esters of fatty acids and of mono- or polyethoxylated isosorbides.

8. Composition according to any one of Claims 2 to 7, in which the combined surfactants and stabilizers for emulsions represent from 1% to 100% by weight, with respect to the total weight of paraffin(s) in the composition.

9. Use of a composition according to any one of Claims 1 to 8, in the post-treatment of exhaust gases by Selective Catalytic Reducer catalyst.

10. Use according to Claim 9, to avert, limit or prevent the formation of deposits in an SCR exhaust line.

11. Use of a composition according to any one of Claims 1 to 8, to avoid or reduce foaming during the filling of a tank of the composition.

12. Method for the treatment of exhaust gases in an internal combustion engine, preferably a diesel engine, equipped with an SCR system, this method being **characterized in that** it comprises at least one stage of introduction of a composition according to any one of Claims 1 to 8 into the SCR line, upstream of the SCR system.

13. Method according to Claim 12, to reduce the deposits in an SCR line, in particular the cyanuric acid deposits.
